# EUROPEAN PATENT APPLICATION

(11) **EP 4 365 141 A1**
(43) Date of publication of application: **08.05.2024**
(21) Application number: 23199990.5
(22) Date of filing: 27.09.2023
(51) Int. Cl.: C02F 1/463, C02F 1/461

(54) **UPFLOW ELECTROCHEMICAL COAGULATION REACTOR AND METHOD OF REMOVING CONTAMINANT FROM WASTEWATER USING SAME**

(30) Priority: 02.11.2022 KR 20220144442
(71) Applicant: SK Innovation Co., Ltd., Seoul 03188 (KR)
(72) Inventor: PARK, Joong Min, 34124 Yusung-Gu, Daejeon (KR)
(74) Representative: Frick, Robert

(57) **Abstract**

The present invention relates to an upflow electrochemical coagulation reactor for power-efficiently removing low-concentration contaminants present in wastewater.

## Description

### BACKGROUND OF THE INVENTION

### 1. Field of the Invention

The present invention relates to an upflow electrochemical coagulation reactor and a method of removing contaminants from wastewater using the same.

### 2. Description of the Related Art

Electrocoagulation technology is used to coagulate and remove contaminants such as phosphorus and heavy metals present in water systems. Water treatment using electrocoagulation technology is performed by aggregation reaction between leached metals generated by dissolution of consumable electrodes and contaminants present in a water system. In this regard, recently, studies have been actively conducted on controlling a change in power required for driving a reactor according to a decrease in size due to elution of consumable electrodes and a change in a gap between electrodes.

### SUMMARY OF THE INVENTION

The present invention relates to an upflow electrochemical coagulation reactor and a method of removing contaminants from wastewater using the same.

Specifically, an upflow electrochemical coagulation reactor according to the invention includes: a cathode fixed inside the reactor; at least one movable anode spaced apart from the cathode by a predetermined distance; a sensor configured for sensing a change in the distance between the cathode and the anode; a controller configured for making the cathode and the anode have a constant distance by monitoring a change in the cathode-anode distance sensed by the sensor; a first separator and a second separator, the first separator being positioned above the second separator; and a sludge outlet in communication with the second separator for sludge discharge to the outside of the reactor.

According to an embodiment, wherein the reactor comprises two or more anodes. The distance between one anode and the cathode may be the same as the distance between the other anode and the cathode.

According to one embodiment, the cathode may include stainless steel(SS) or Ti.

According to an embodiment, the anode may include any one of Fe, Al, and alloys comprising the same.

According to an embodiment, the first separator and the second separator each may include a porous metal or ceramic.

According to an embodiment, the second separator may be conical.

According to an embodiment, the cathode and the anode may be located between the first separator and the second separator.

According to an embodiment, the reactor may further include a floating matter outlet, configured to discharge metal ions eluted from the anode to the outside of the reactor, wherein the floating matter outlet is located above the first separator.

According to an embodiment, the reactor may further include a gas outlet configured to discharge gaseous components from inside the reactor to the outside of the reactor, wherein the gas outlet is located at a top portion of the reactor.

According to an embodiment, the reactor further comprises a raw water inlet configured to introduce raw water into the reactor, wherein the raw water inlet is positioned lower than the second separator.

According to an embodiment, the reactor further comprises a treated water outlet configured to discharge treated water to the outside of the reactor, wherein the treated water outlet is positioned above the first separator.

The invention further relates to the use of an upflow electrochemical coagulation reactor according to the invention for removing contaminants in wastewater, and a corresponding method for removing contaminants in wastewater.

According to an embodiment, the contaminants may include phosphorus, heavy metals, organic matter, or a combination thereof.

According to an embodiment, electric power applied to the reactor is monopolar.

The features and advantages of the present invention can be more clearly understood with reference to the following detailed description and the accompanying drawings.

In an embodiment, the reactor can be applied with a constant voltage during operation of the reactor, and the anode can be replaced without turning off the power supply of the reactor.

The invention makes it possible to power-efficiently remove low-concentration contaminants in wastewater.

### BRIEF DESCRIPTION OF THE DRAWINGS

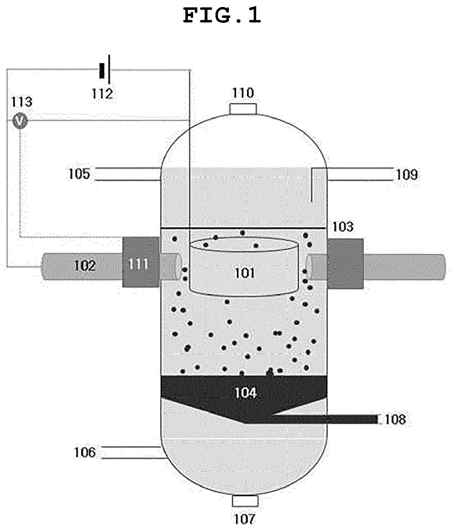

FIG. 1 is a schematic diagram of an upflow electrochemical coagulation reactor according to an embodiment.

### DESCRIPTION OF THE PREFERRED EMBODIMENTS

The above and other objectives, features, and advantages of the present invention will be more clearly understood from the following detailed description of embodiments, with reference to the accompanying drawings.

FIG. 1 is a schematic diagram of an upflow electrochemical coagulation reactor according to one embodiment.

The term "upflow" used in this specification refers to that raw water flowing into a reactor flows upward from the bottom of the reactor.

The upflow electrochemical coagulation reactor includes a cathode 101 fixed inside the reactor and at least one movable anode 102. The anode 102 may be positioned a predetermined distance from the cathode 101.

The cathode 101 is a reduction electrode that is reduced when the reactor is powered. The cathode 101 is not eluted and consumed even when the reactor is powered. The cathode 101 is fixed at a specific position in the reactor and is not moved by a controller 111.

Here, at least two anodes 102 exist, the cathode 101 is fixed at the center of the reactor as illustrated in FIG. 1 so that every anode 102 can be equidistant from the cathode 101. Here, the fixing method of the reactor is not particularly limited.

The cathode 101 may include a metal, and as described above, the cathode 101 must not be eluted even when electric power is applied. The metal may be a metal having high electrical conductivity and having dissolution stability in an electrolyte. In terms of dissolution stability while the reactor is powered, and economy, the metal is preferably stainless steel(SS) or Ti.

The anode 102 is a consumable electrode that is consumed due to elution of metal ions therefrom by an oxidation reaction when the reactor is powered. The eluted metal ions form hydroxides, which act as coagulants for coagulating contaminants. Unlike the cathode 101 fixed in the reactor, the anode 102 extends through the outer wall of the reactor so that a part of the anode is positioned inside the reactor and the other part is positioned outside the reactor. The anode 102 can be moved by the controller 111. In addition, although the anode 102 positioned inside the reactor is completely consumed, the anode 102 can be continuously supplied from the outside of the reactor to the inside of the reactor.

The anode 102 may be positioned in a predetermined distance from the cathode 101, and the predetermined distance is a controlled distance such that a desired amount of metal ions can be eluted from the anode 102 while electric power is applied to the reactor. Here, the predetermined distance between the anode 102 and the cathode 101 means the distance between the cathode 101 and one end of the anode 102 closest to the cathode 101. In an embodiment, the predetermined distance may range from 1 to 30 mm, preferably from 3 to 25 mm, and more preferably from 5 to 20 mm. When the distance between the cathode 101 and anode 102 is less than 1 mm, oxygen generated from the anode 102 and hydrogen bubbles generated from the cathode 101 may hinder the electrode-to-electrode reaction which occurs between the electrodes. When the distance exceeds 30 mm, since the resistance between the electrodes increases, the applied voltage needs to be increased, resulting in increase in power consumption.

The reactor may include at least one anode 102. When the reactor has two or more anodes 102, the two anodes 102 are equidistant from the cathode 101. The same distance between each anode 102 and the cathode 101 is maintained so that the same voltage can be applied between each anode 102 and cathode 101, which can provide convenience of management by causing uniform consumption of the anode 102, which is a consumable electrode.

The anode 102 may include a metal. The metal is eluted as a metal ion when electric power is applied and is oxidized to a metal hydroxide in a water system. The metal hydroxide is crystallized when meeting each other to function as a coagulant. For example, in an embodiment, the metal may include a highly reactive metal, and the metal may be any one of Fe, Al, and a alloys comprising the same.

The reactor may include a sensor 113 that senses a change in distance between the cathode 101 and the anode 102. In an embodiment, the sensor 113 may sense a change in the distance by measuring a change in voltage applied between the cathode 101 and the anode 102. When electric power is applied to the reactor, as the anode 102 is eluted to produce metal ions, the size of the anode 102 decreases and the distance between the cathode 101 and the anode 102 increases. As the distance between the electrodes increases, the voltage required to elute the anode 102 increases. The sensor 113 can sense a change in the distance between the cathode 101 and the anode 102 on the basis of the voltage change.

The reactor may include a controller 111 that makes the distance between the cathode 101 and the anode 102 constant on the basis of a change in the distance between the cathode 101 and the anode 102 sensed by the sensor 113. When the distance between the cathode 101 and the anode 102, which is sensed by the sensor 113, is increased by a certain percentage compared to the initially set distance before electric power is applied, the controller 111 maintains the distance the cathode 101 and the anode 102 by pushing the anode 102 toward the cathode 101. Therefore, the distance between the previous cathode 101 and anode 102 can be maintained. In an embodiment, when the sensor 113 senses a change in the distance between the cathode and the anode 102 on the basis of the voltage change measured, the controller 111 may control the anode 102 so that the voltage between the cathode 101 and the anode 102 is reduced. Specifically, when the controller 111 senses that the distance between the cathode 101 and the anode 102 is increased by 10% or more, preferably 5% or more, and more preferably 3% or more compared to the initially set distance between the cathode 101 and the anode 102 before electric power is applied, the controller 111 will make the changed distance returned to the distance that is detected before electric power is applied. Preferably, the controller 111 operates in real time by receiving a change in the distance between the cathode 101 and the anode 102 in real time from the sensor 113. In this way, by maintaining the distance between the cathode 101 and the anode 102, which is detected before electric power is applied, even though the reaction proceeds, a desired amount of metal ions may be uniformly eluted from the anode 102, so that an efficient aggregation reaction may be performed.

The controller 111 is not particularly limited as long as it can insert the anode 102 into the reactor from the outside of the reactor. In an embodiment, the controller 111 may include a motor. The motor may be mounted on the outer wall of the reactor through which the anode 102 passes, to provide a driving force to push the anode 102 toward the cathode 101 placed in the reactor. When the anode 102 is pushed toward the cathode 101 by the controller 111 and is finally consumed, a new anode 102 will be loaded on the controller 111 while the reactor is being powered.

The reactor may include a first separator 103 and a second separator 104. The first separator 103 and the second separator 104 may be installed inside the reactor such that one end of each of the first and second separators 103, 104 is parallel to the bottom of the reactor. In this case, the first separator 103 may be positioned above the second separator 104.

The first separator 103 and the second separator 104 may define a specific zone inside the reactor existing between them, and the zone is a bed in which a coagulant is present. Here, the coagulant is formed by crystallization of metal hydroxides made from metal ions eluted from the anode 102 when electric power is applied to the reactor. Coagulants can form sludge by covalent or electrostatic bonding with contaminants such as phosphorus and heavy metals present in raw water while their surface is hydrated. In addition, even though the coagulant does not form sludge, while it moves from the first separator 103 to the second separator 104, its size increases due to contact with other metal hydroxides, resulting in it being difficult to pass through the second separator.

The first separator 103 and the second separator 104 may include porous metal or porous ceramic. Here, the porous metal and porous ceramic are materials that allows transmission of only a liquid, and prevent solid components such as a coagulant, which is a hydroxide of metal ions eluted from the anode 102, and sludge generated by reaction between the coagulant and contaminants, from exiting through the top and bottom surfaces of the bed. The porous metal and porous ceramic may be, for example, a metal or ceramic having pores capable of filtering out solids of a specific size and allowing transmission of only a liquid phase, or may be in the form of a sieve or mesh.

In an embodiment, the porous metal or porous ceramic may have pores with sizes ranging from 1 to 10 µm. The coagulant made from metal ions eluted from the anode 102 has a size of several tens to hundreds of micrometers, and the coagulant and sludge produced by bonding between the coagulant and contaminants cannot pass through the top or bottom surface of the bed, i.e., through the pores of the porous metal or porous ceramic.

The reactor has a sludge outlet 108, which is in communication with the second separator 104 for sludge discharge. As described above, the sludge outlet 108 is an output port through which solid components such as the coagulant and sludge present in the bed can be discharged to the outside of the reactor. In an embodiment, since solid components are discharged through the sludge outlet 108, the sludge outlet 108 may be equipped with a sludge withdrawing device.

The second separator 104 may have any shape that facilitates solid components such as coagulant and sludge, which are collected by sedimentation, to be discharged through the sludge outlet 108 easily. For example, the second separator 104 may have a conical shape. In this case, the coagulant and the sludge generated between the first and second separators 103, 104 are collected at the vertex portion of the conical second separator 104 by settling, so that the collected coagulant and sludge can be easily discharged through the sludge outlet 108 that is formed to communicate with the vertex portion of the second separator 104.

Referring to FIG. 1, the cathode 101 and the anode 102 may be disposed between the first separator 103 and the second separator 104. More preferably, the cathode 101 and the anode 102 may be positioned to be closer to the first separator 103 in the intermediate zone between the first separator 103 and the second separator 104. By positioning the cathode 101 and the anode 102 in an upper portion of the reactor so as to be close to the first separator 103, it is possible to prevent the metal hydroxide (i.e., coagulant) generated due to elution of the anode 102 from accumulating on the surface of the cathode 101 and the anode 102, thereby maintaining a predetermined voltage between the cathode 101 and the anode 102. More specifically, since the cathode 101 and the anode 102 are positioned closer to the first separator 103, metal ions eluted from the anode 102 and their hydroxides are generated in an upper portion of the reactor, and the generated hydroxides descend by gravity and meet with other metal hydroxides, thereby becoming bigger aggregates. As a result, the coagulant can be concentrated in the vicinity of the second separator 104. Since the cathode 101 and the anode 102 are positioned between the first separator 103 and the second separator 104, metal ions eluted from the anode 102 can form a bed in the region defined by the first separator 103 and the second separator 104.

In the bed, the concentration of coagulant may not be uniform. Specifically, as shown in FIG. 1, the concentration of the coagulant at the bottom of the bed, that is, in the vicinity of the second separator 104 may be extremely higher than that at the top of the bed. In addition, the concentration of the coagulant may be low in a position corresponding to the upper part of the bed, where the cathode 101 and the anode 102 are positioned. As described above, the non-uniformity of the coagulant concentration is caused by the action of gravity, which significantly lowers the probability that the coagulant adheres to the surfaces of the cathode 101 and anode 102, enabling uniform voltage application to the cathode 101 and anode 102. This increases the probability that the coagulant particles intensively existing at the bottom of the bed come into contact contaminants present in wastewater flowing upward from the bottom of the reactor, thereby facilitating coagulation even in the case where the concentration of contaminants in the wastewater is extremely low.

The reactor may further include a raw water inlet 106. The raw water inlet 106 may be positioned lower than the second separator 104. Through the raw water inlet 106, raw water such as wastewater to be treated is introduced into the reactor, and the introduced raw water may pass through the second separator 104 as an upward flow. Contaminants present in the raw water can cause a coagulation reaction with the coagulant in the bed to form sludge.

The reactor may further include a floating matter outlet 105. The floating matter outlet 105 may be located above the first separator 103. During the oxidation-reduction reaction in which the metal of the anode 102 is eluted, hydrogen gas is generated at the cathode 101 and oxygen gas is generated at the anode 102 by a side reaction of water decomposition. The hydrogen and oxide gases may push the metal ions eluted from the anode 102 to the top of the reactor through the first separator 103. The metal ions floated to the top form a coagulant through a hydroxylation reaction, and contaminants in the raw water coagulate to form sludge. This sludge is discharged to the outside of the reactor through the floating matter outlet 105.

The reactor may further include a gas outlet 110. The gas outlet 110 is an output port which gaseous components in the reactor are discharged to the outside of the reactor. It may be located above the first separator 103, in the top portion of the reactor. The oxygen and hydrogen gases generated from the cathode 101 and anode 102 during the aforementioned oxidation-reduction reaction may be discharged through the gas outlet 110.

The reactor may further include a treated water outlet 109. The contaminants contained in the raw water introduced into the reactor through the raw water inlet 106 are discharged through the sludge outlet 108 after undergoing a coagulation reaction in the bed, and the residual contaminants, coagulant, and sludge are discharged through the floating matter outlet 105 by electrofloatation. In addition, the oxygen and hydrogen gas generated during the oxidation-reduction reaction of the cathode 101 and anode 102 are discharged through the gas outlet 110. In this way, the raw water that is treated, i.e., treated water, may be discharged to the outside of the reactor through the treated water outlet 109. The treated water outlet 109 is equipped with a special structure that prevent floating matter existing above the first separator 103 from being discharged to the outside of the reactor along with the treated water when the treated water is discharged. The floating matter outlet 105 and the treated water outlet 109 also serve to maintain the water level in the reactor.

In an embodiment, the treated water outlet 109 may include a screen and may be positioned below the floating matter outlet 105. Through the treated water outlet 109 located below the floating matter outlet 105 and equipped with a screen capable of filtering out solid components, only the liquid component of the treated water containing some suspended solids is discharged to the outside of the reactor through the treated water outlet 109.

The treated water discharged through the treated water outlet 109 may have a concentration of contaminants reduced by 90% or more, preferably 95% or more, and more preferably 99% or more, compared to the initial concentration in raw water introduced into the reactor through the raw water inlet 106.

The reactor may further include a drain 107. The drain 107 may be located at the bottom of the reactor. Through the drain 107, washing water may be discharged during periodic maintenance of the reactor, or coagulant and sludge that may be present below the second separator 104 may be discharged to the outside of the reactor.

Electric power applied to the reactor from power source 112 may be monopolar. The monopolar power application is a power application method in which one electrode has only one polarity. When multiple plate-like electrodes are aligned in parallel, in the case of a bipolar power application method in which every single intermediate electrode disposed between two outer electrodes directly connected to a power supply have a first side having a positive (+) polarity and a second side, which is opposite to the first side, has a negative (-) polarity, a significantly high voltage needs to be applied between the two outer electrodes to cause electric field on all the intermediate electrodes between the outer electrodes, and furthermore the intermediate electrodes between the outer electrodes directly connected to the power supply are consumed. However, in the case of a monopolar power application method, it is not necessary to apply a high voltage, only an electrode that is connected to the negative polarity of the power supply is consumed upon power application, and only a small amount of metal ion is eluted from the anode 102, which is more effectively used for removal of low-concentration contaminants.

According to one aspect of the present invention, a method of removing contaminant in wastewater using the above-described upflow electrochemical coagulation reactor is provided. When raw water is introduced through the raw water inlet 106 of the above-described upflow electrochemical coagulation reactor and power is applied, an oxidation-reduction reaction occurs between the cathode 101 and the anode 102, so that the metal contained in the anode 102 is eluted in the form of ions. The eluted metal ions form a hydroxide-type coagulant, and the coagulant is dispersed between the first separator 103 and the second separator 104 to form a bed. Contaminants present in the wastewater introduced as an upward flow through the raw water inlet 106 located below the second separator 104 react with the coagulant in the bed to form sludge which is an aggregate of the coagulant and the contaminants. As the metal ions forming the coagulant are produced by oxidation of the anode 102, when the anode 102 is gradually consumed, and the distance between the cathode 101 and the anode 102 gradually increases. When this event happens, the sensor 113 senses the change in the distance, and transmits a signal to the controller 111, and transmits the signal. The controller 111 moves the anode 102 so that the initial distance detected before power application can be maintained between the cathode 101 and the anode 102, at the time of receiving at the signal from the sensor 113. The formed sludge is drawn and discharged out of the reactor through the sludge outlet 108.

The contaminants present in the wastewater may include phosphorus, heavy metals, organic materials, or combinations thereof. Here, the organic material may form an electrostatic bond with a hydroxide formed by hydroxylation of metal ions eluted from the anode 102, and thus be aggregated. That is, it may be an organic material reactive with the metal ions. In addition, the metal ions eluted from the anode 102 have a property of forming a polymer, which forms a kind of filter in the vicinity of the second separator 104 together with the coagulant that forms the bed. Organic matter having a high molecular weight in raw water removed by filtration of the second filter may also fall within the concept of the organic material.

Through a series of steps as described above, contaminants can be removed from wastewater. In addition, contaminants and suspended materials in the wastewater are floated by oxygen and hydrogen gas generated during oxidation-reduction reaction of the cathode 101 and an anode 102, so that coagulant and sludge are generated at a position above the first separator 103, and discharged through the floating matter outlet 105.

In addition, oxygen and hydrogen gases generated from the cathode 101 and anode 102 may be discharged to the outside of the reactor through the gas outlet 110.

After removing the contaminants from the wastewater and removing gases generated during the treatment of the wastewater, the produced treated water is discharged to the outside of the reactor through the treated water outlet 109.

### List of reference signs:

- 101: cathode
- 102: anode
- 103: first separator
- 104: second separator
- 105: floating matter outlet
- 107: drain
- 106: raw water inlet
- 108: sludge outlet
- 109: treated water outlet
- 110: gas outlet
- 111: controller
- 112: electric power source
- 113: sensor

## Claims

1. An upflow electrochemical coagulation reactor comprising:
a cathode (101) fixed inside the reactor;
at least one movable anode (102) being in a predetermined distance from the cathode (101);
a sensor (113) configured to sense a change in the distance between the cathode (101) and the anode (102);
a controller (111) configured to make the distance between the cathode (101) and the anode (102) constant while adapting to a change in the distance between the cathode (101) and the anode (102) sensed by the sensor (113); and
a first separator (103) and a second separator (104), the first separator (103) being positioned above the second separator (104); and
a sludge outlet (108) being in fluid communication with the second separator (104) for sludge discharge to the outside of the reactor.

2. The upflow electrochemical coagulation reactor of claim 1, wherein the reactor comprises two or more anodes (102) and each of the two anodes (102) is in an equal distance to the cathode (101).

3. The upflow electrochemical coagulation reactor of any preceding claim, wherein the cathode (101) comprises stainless steel(SS) or Ti.

4. The upflow electrochemical coagulation reactor of any preceding claim, wherein the anode (102) comprises any one of Fe, Al, and alloys comprising the same.

5. The upflow electrochemical coagulation reactor of any preceding claim, wherein the first separator (103) and the second separator (104) each comprises a porous metal or ceramic.

6. The upflow electrochemical coagulation reactor of any preceding claim, wherein the second separator (104) is conical.

7. The upflow electrochemical coagulation reactor of any preceding claim, wherein the cathode (101) and the anode (102) are disposed between the first separator (103) and the second separator (104).

8. The upflow electrochemical coagulation reactor of any preceding claim, wherein the reactor further comprises a floating matter outlet (105) configured to discharge metal ions eluted from the anode (102) to the outside of the reactor, wherein the floating matter outlet (105) is located above the first separator (103).

9. The upflow electrochemical coagulation reactor of any preceding claim, wherein the reactor further comprises a gas outlet (110) configured to discharge gaseous components from inside the reactor to the outside of the reactor, wherein the gas outlet (110) is located at a top portion of the reactor.

10. The upflow electrochemical coagulation reactor of any preceding claim, wherein the reactor further comprises a raw water inlet (106) configured to introduce raw water into the reactor, wherein the raw water inlet (106) is positioned lower than the second separator (104).

11. The upflow electrochemical coagulation reactor of any preceding claim, wherein the reactor further comprises a treated water outlet (109) configured to discharge treated water to the outside of the reactor, wherein the treated water outlet (109) is positioned above the first separator (103).

12. A method of removing contaminants from wastewater using the upflow electrochemical coagulation reactor of any preceding claim.

13. The method of claim 12, wherein the contaminants comprise phosphorus, heavy metals, organic matter, or a combination thereof.

14. The method of claim 12 or 13, wherein electric power applied to the reactor is monopolar.

15. Use of an upflow electrochemical coagulation reactor of any one of claims 1 to 11 for removing contaminants from wastewater.
